# EUROPÄISCHE PATENTSCHRIFT

(11) **EP 1 207 329 B1**
(45) Veröffentlichungstag und Bekanntmachung des Hinweises auf die Patenterteilung: **26.03.2003**
(21) Anmeldenummer: 00125187.5
(22) Anmeldetag: 20.11.2000
(51) Int. Cl.: F16K 31/00

(54) **Piezoventil**
Piezo valve
Soupape piezoélectrique

(43) Veröffentlichungstag der Anmeldung: 22.05.2002
(73) Patentinhaber: FESTO AG & Co, 73734 Esslingen (DE)
(72) Erfinder: Frisch, Herbert, 73035 Göppingen (DE); Wirtl, Hannes, 86956 Schongau (DE); Weinmann, Michael, Dr., 73655 Plüderhausen (DE); Maichl, Martin, 73084 Salach (DE)
(74) Vertreter: Abel, Martin, Dipl.-Ing.

(56) Entgegenhaltungen:
- US-A- 4 450 375
- US-A- 4 492 360
- US-A- 5 570 716
- US-A- 6 024 340

## Beschreibung

Die Erfindung betrifft ein Piezoventil gemäß dem Oberbegriff des Patentanspruchs 1.

Bei einem aus der US-A-4 450 355 bekannten Piezoventil dieser Art sind zwei piezoelektrische Biegewandler an einem Lagerungsabschnitt fest miteinander verbunden und gemeinsam in einem Ventilgehäuse fest eingespannt. Entsprechend der gewünschten Ventilfunktion können die Biegewandler elektrisch angesteuert werden, um durch Verbiegen eine Auslenkbewegung hervorzurufen, die zum Öffnen oder Verschließen zu steuernder Ventilöffnungen herangezogen wird.

Wie schon bei nur einen einzigen Biegewandler enthaltenden Piezoventilen tritt auch bei der Bauform gemäß US-A-4 450 355 das Problem auf, dass die durch das Auslenken der Biegewandler erzielbaren Stellwege und dementsprechend der maximal freigebbare Strömungsquerschnitt einer Ventilöffnung bei üblichen Ansteuerspannungen relativ gering ist.

Es ist daher die Aufgabe der vorliegenden Erfindung, ein Piezoventil zu schaffen, bei dem sich mit einem Biegewandler größere Stellwege realisieren lassen.

Gelöst wird diese Aufgabe durch ein Piezoventil der eingangs genannten Art, das sich dadurch auszeichnet, dass die Biegewandlereinheit an dem Lagerungsabschnitt eine steife Verbindung zwischen den Biegewandlern aufweist, und dass die Biegewandlereinheit in ihrer Gesamtheit um eine quer zu den Auslenkebenen verlaufende Drehachse gegenüber dem Ventilgehäuse verschwenkbar gelagert ist, wobei mindestens ein Biegewandler als zur Steuerung mindestens einer ihm zugeordneten Ventilöffnung dienender Steuer-Biegewandler ausgeführt ist und der andere Biegewandler einen zur Stellweg- und/oder Kraftvergrößerung des Steuer-Biegewandlers geeigneten Abstütz-Biegewandler bildet, der durch Anlegen der Ansteuerspannung gegen eine in seinem Auslenkweg angeordnete Abstützfläche vorspannbar ist.

Bei einem derartigen Aufbau kann durch Anlegen einer Ansteuerspannung an die Biegewandlereinheit in an sich bekannter Weise die Auslenkung des Steuer-Biegewandlers hervorgerufen werden, woraus ein gewisser Stellweg dieses Steuer-Biegewandlers resultiert. Indem nun zusätzlich der Abstütz-Biegewandler aktiviert wird, welcher mit gegensinniger Auslenkrichtung auf die in seinem Auslenkweg angeordnete Abstützfläche drückt, findet ein Verschwenken der restlichen Biegewandlereinheit um die Drehachse statt, was eine zusätzliche Verlagerung des Steuer-Biegewandlers in der gewünschten Auslenkrichtung und dementsprechend eine Vergrößerung des mit diesem realisierbaren Stellweges zur Folge hat. Zusätzlich oder alternativ kann das geschilderte Verhalten auch genutzt werden, um die Kraft zu erhöhen, mit der der Steuer-Biegewandler in einer bestimmten Stellung gehalten wird.

Mit nur einem Steuer-Biegewandler und einem Abstütz-Biegewandler lässt sich eine einfache Absperr-Ventilfunktion realisieren, was in Verbindung mit einer weiteren Ventilöffnung die Möglichkeit zur Verwirklichung eines 2/2-Wegeventils schafft.

Allerdings können die Biegewandler der Biegewandlereinheit bei Bedarf auch jeweils mit einer Mehrfachfunktion versehen werden, so dass jeder Biegewandler einen Steuer-Biegewandler repräsentiert, der gleichzeitig für den jeweils anderen Steuer-Biegewandler als Abstütz-Biegewandler fungiert. Auf diese Weise lassen sich unter Beibehaltung der geschilderten Vorteile hinsichtlich Vergrößerung von Stellweg und/oder Schließkraft höherfunktionale Piezoventile verwirklichen, beispielsweise 3/2-Wegeventile oder gar 3/3- und 3/4-Wegeventile, die auch eine Mittelstellung zulassen, bei der jeder Biegewandler eine ihm zugeordnete Ventilöffnung verschließt. Derartige Piezoventile sind für Anwendungen wichtig, bei denen es darum geht, ein vorgegebenes Fluidvolumen einzusperren.

Ein weiterer Vorteil der Drehlagerung der Biegewandlereinheit besteht darin, dass bei temperaturbedingten Verformungen eine automatische selbsttätige Lagekorrektur stattfindet, ohne die Spannungsverhältnisse zu beeinflussen, so dass ungeachtet von Temperatureinflüssen stets gleichbleibende Betriebseigenschaften vorliegen.

Letztlich wird durch die erfindungsgemäße Bauweise.auch die Herstellung des Piezoventils erleichtert, weil auf eine feste Einspannung des Biegewandlers verzichtet werden kann, der lediglich schwenkbeweglich aufgehängt werden muss.

Weitere Vorteile der Erfindung ergeben sich durch die in den Unteransprüchen erwähnten Maßnahmen.

Wenn es darum geht, eine reziproke Funktionalität zu gewährleisten, dahingehend, dass jeder Biegewandler sowohl einen Steuer-Biegewandler als auch, bezüglich des anderen Steuer-Biegewandlers, einen Abstütz-Biegewandler bildet, ist es von besonderem Vorteil, wenn die die Abstützfunktion gewährleistende Abstützfläche unmittelbar vom Ventilsitz der jeweils zugeordneten Ventilöffnung gebildet ist. Auf die Ausbildung einer separaten Abstützfläche kann somit verzichtet werden, ihre Funktion wird vom Ventilsitz übernommen.

Es ist ferner von Vorteil, wenn im Falle des Vorhandenseins zweier zu steuernder Ventilöffnungen diese Ventilöffnungen auf ein und derselben Seite der Biegewandlereinheit vorgesehen sind. Dadurch wird die Herstellung erleichtert, weil sämtliche zu steuernden Ventilöffnungen mit eventuell zugeordneten Ventilsitzen in einem gemeinsamen Gehäuseteil des Ventilgehäuses realisiert werden können, so dass sich Fertigungstoleranzen minimieren lassen.

Es können Federmittel vorhanden sein, die mindestens einen Steuer-Biegewandler in Richtung der die zu steuernde Ventilöffnung verschließenden Schließstellung vorspannen und im elektrisch deaktivierten Zustand in dieser Schließstellung halten. Über die drehmomentsteife Verbindung im Bereich des Lagerungsabschnittes kann dadurch gleichzeitig bewirkt werden, dass auch der andere Biegewandler in eine Schließstellung vorgespannt wird, sofern er ebenfalls als Steuer-Biegewandler konzipiert ist.

Zweckmäßigerweise sind die Biegeelemente derart elektrisch miteinander verknüpft, dass durch gemeinsame Ansteuerung eine gleichzeitige gegensinnige Auslenkung hervorgerufen wird. Möglich wäre es allerdings auch, eine individuelle Ansteuermöglichkeit vorzusehen, so dass beispielsweise der gewünschte Stellweg- und/oder Kraftvergrößerungseffekt nur bei Bedarf zugeschaltet wird oder eine variable Zuschaltung stattfindet, um, beispielsweise für stetige Anwendungen, variable Stellwegsvergrößerungen zu erhalten.

Bei einer besonders vorteilhaften Ausgestaltung der Schwenklagerung ist die Biegewandlereinheit mit einer Seite ihres Lagerungsabschnittes auf eine gehäuseseitige Auflagerpartie aufgelegt und wird dort durch mindestens ein von der entgegengesetzten Seite her einwirkendes Beaufschlagungselement gegen die Auflagerpartie vorgespannt. Die Biegewandlereinheit ist dabei im Bereich der Schwenklagerstelle axial unbeweglich fixiert, um den gewünschten Drehmitnahmeeffekt zu gewährleisten. Bei dem mindestens einen Beaufschlagungselement handelt es sich insbesondere um ein Federelement.

Bei entsprechender Ausgestaltung der Biegewandlereinheit kann die für den Betrieb erforderliche Einspeisung der Ansteuerspannung unmittelbar über das mindestens eine Beaufschlagungselement und/oder über die Auflagerpartie erfolgen, so dass keine zusätzlichen Kontaktierungsmaßnahmen benötigt werden.

Insbesondere unter Berücksichtigung der jeweiligen betrieblichen Anforderungen kann vorgesehen sein, abweichend von einem üblicherweise vorhandenen gleichen Abstand zwischen den zu steuernden Ventilöffnungen und der Drehachse unterschiedliche Abstände vorzusehen. Auch können bei mehreren zu steuernden Ventilöffnungen die diesen zugeordneten Ventilsitze wahlweise in einer gemeinsamen Ebene oder auf unterschiedlicher Höhe liegen.

Die steife Verbindung der beiden Biegewandler im Bereich des gemeinsamen Lagerungsabschnittes könnte prinzipiell durch beliebige Befestigungsmaßnahmen realisiert werden, die eine derart starre Verbindung gewährleisten, dass zwischen den beiden Biegewandlern in der durch die Drehachse definierten Drehrichtung eine Drehmomentübertragung gewährleistet ist, die den gewünschte Mitnahmeeffekt zur Folge hat. Als besonders vorteilhaft wird jedoch eine Bauform angesehen, bei der die beiden Biegewandler jeweils mindestens einen, eine oder mehrere Piezomaterialschichten enthaltenden Piezokörper mit zugehöriger Elektrodenanordnung aufweisen, wobei sie am Lagerungsabschnitt mit den Piezomaterialschichten ihrer Piezokörper einstückig fest miteinander verbunden sind. Diese einstückige Bauform ist fertigungstechnisch besonders günstig, wobei man sich die Biegewandlereinheit vergleichbar einer über einen Teil ihrer Länge geschlitzten Platte vorstellen kann.

Nachfolgend wird die Erfindung anhand der beiliegenden Zeichnung näher erläutert. In dieser zeigen:
- Fig. 1: einen Längsschnitt durch eine erste Bauform des erfindungsgemäßen Piezoventils gemäß Schnittlinie I-I aus Fig. 2 in einer Bauform als 3/3-Wege-Piezoventil,
- Fig. 2: das Piezoventil aus Fig. 1 im Querschnitt gemäß Schnittlinie II-II in einer Sperrstellung, wobei jeder Biegewandler eine ihm zugeordnete Ventilöffnung verschließt,
- Fig. 3: das Piezoventil gemäß Fig. 1 in einer der Fig. 2 entsprechenden Darstellungsweise in einer Speisestellung, bei der eine zu einem Speisekanal gehörende Ventilöffnung freigegeben und die zu einem Entlüftungskanal gehörende Ventilöffnung verschlossen ist,
- Fig. 4: das Piezoventil gemäß Fig. 1 in einer den Fig. 2 und 3 entsprechenden Darstellungsweise bei Einnahme einer Entlüftungsstellung, bei der die zu einem Entlüftungskanal gehörende Ventilöffnung freigegeben und die zu einem Speisekanal gehörende Ventilöffnung geschlossen ist,
- Fig. 5 bis 7: das Piezoventil aus Fig. 1 in schematischer Längsschnittdarstellung, wobei wiederum die Sperrstellung (Fig. 5), die Speisestellung (Fig. 6) und die Entlüftungsstellung (Fig. 7) abgebildet sind,
- Fig. 8: das Piezoventil in perspektivischer Darstellung mit nur partiell abgebildetem Ventilgehäuse und
- Fig. 9: die Biegewandlereinheit in Einzeldarstellung in einer Draufsicht auf eine ihrer beiden größerflächigen Längsseiten.

Das aus der Zeichnung ersichtliche Piezoventil 1 verfügt über ein längliches Ventilgehäuse 2, das eine Ventilkammer 3 begrenzt.

Bevorzugt hat das Ventilgehäuse 2 einen zweiteiligen Aufbau mit einem Unterteil 4 und einem daran fixierten Oberteil 5. Beim Ausführungsbeispiel umfasst das Unterteil 4 einen Boden 6 mit randseitig von diesem hochragenden Seitenwänden 7, an die das Oberteil 5 nach Art eines Deckels angesetzt ist.

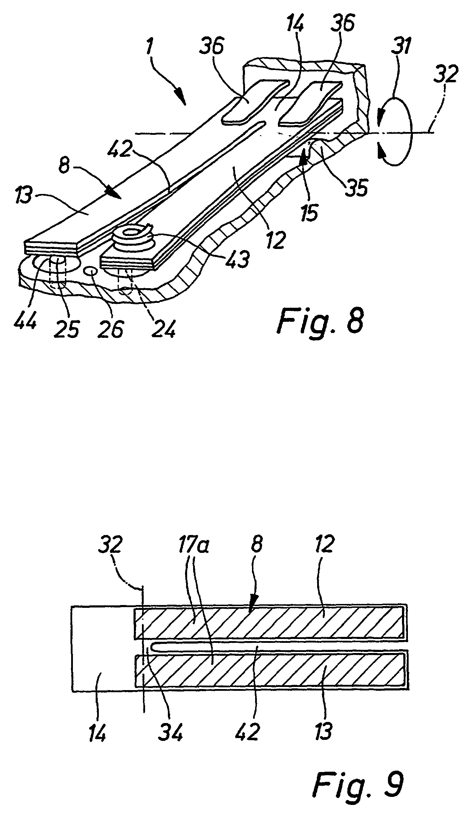

In der Ventilkammer 3 befindet sich eine längliche Biegewandlereinheit 8, die in Fig. 8 in perspektivischer Darstellung und in Fig. 9 in Draufsicht abgebildet ist. Die Biegewandlereinheit 8 hat eine plattenartige Flachgestalt und umfasst zwei piezoelektrische längliche Biegewandler 12, 13, die am rückwärtigen Endbereich der Biegewandlereinheit 8 über einen Lagerungsabschnitt 14 fest miteinander verbunden sind. Die beiden Biegewandler 12, 13 sind somit einschließlich des Lagerungsabschnittes 14 zu einer selbsttragenden Baueinheit in Gestalt der Biegewandlereinheit 8 zusammengefasst.

Die Biegewandlereinheit 8 ist über den Lagerungsabschnitt 14 im Ventilgehäuse 2 fixiert. Die gehäuseseitige Lagerstelle ist bei 15 angedeutet.

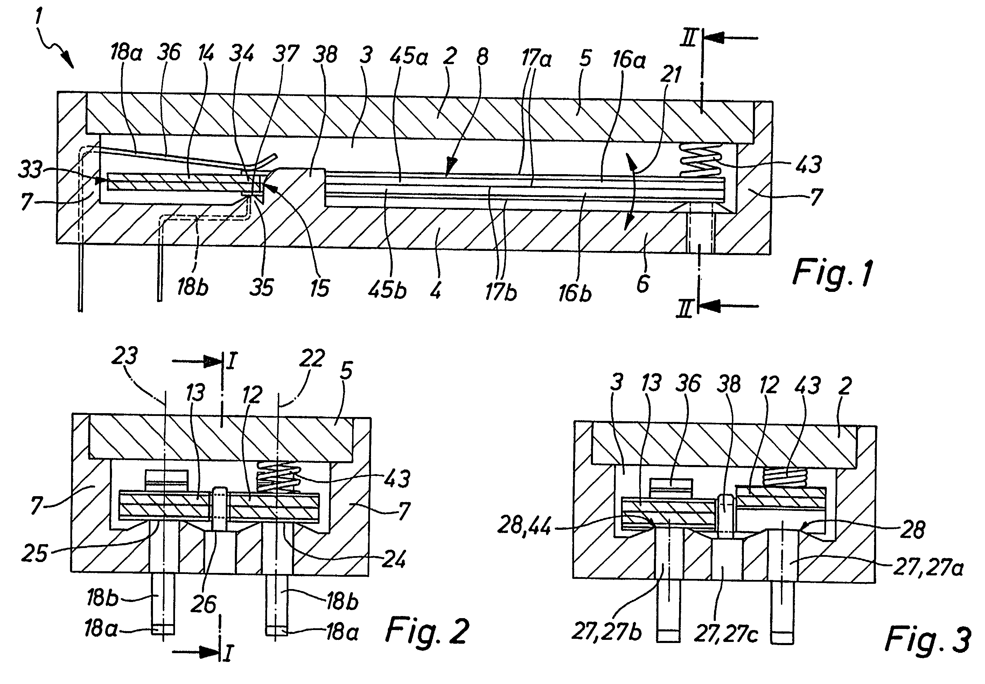

Die Biegewandler 12, 13 haben beim Ausführungsbeispiel jeweils einen bimorphen Aufbau mit zwei Piezokörpern 16a, 16b, die längsseits aneinander befestigt sind, beispielsweise durch Verkleben. Jeder Piezokörper 16a, 16b verfügt über eine oder mehrere Piezomaterialschichten 45a, 45b sowie eine Elektrodenanordnung 17a, 17b, die in an sich bekannter Weise zwischen den einzelnen Piezomaterialschichten bzw. den aneinandergesetzten Piezokörpern verläuft. In der Draufsicht gemäß Fig. 9 sind die beiden äußersten Elektrodenschichten der Elektrodenanordnung 17a des in Fig. 1 oben liegenden ersten Piezokörpers 16a der beiden Biegewandler 12, 13 durch eine Schraffur deutlich gemacht. An der Unterseite der Biegewandler 12, 13 befindet sich eine vergleichbare Elektrodenstruktur.

Über elektrische Kontaktmittel 18a, 18b kann an die Elektrodenanordnungen 17a, 17b von außen her eine Ansteuerspannung angelegt werden. Dies hat ein Auslenken des betroffenen Biegewandlers 12, 13 in einer Auslenkebene 22, 23 zur Folge, die rechtwinkelig zur Hauptausdehnungsebene der unerregten Biegewandlereinheit 8 verläuft. Die Auslenkbewegung ist eine Biegebewegung und durch Doppelpfeil 21 angedeutet. Sie resultiert aus einer Verkürzung und eventuell auch aus einer Verlängerung des piezoelektrischen Materials infolge des über die Elektrodenanordnung angelegten elektrischen Feldes.

Die Biegewandler 12, 13 sind beim Ausführungsbeispiel so ausgeführt, dass sie ausgehend von der Grundstellung, in der sie sich in der Hauptausdehnungsebene der Biegewandlereinheit 8 erstrecken, wahlweise zur einen oder anderen Seite dieser Ebene ausgelenkt werden können.

Prinzipiell könnten die Biegewandler 12, 13 auch über einen anderen strukturellen Aufbau verfügen und beispielsweise als unimorphe oder als trimorphe Piezobieger konzipiert sein.

Innerhalb der Biegewandlereinheit 8 sind die beiden Biegewandler 12, 13 längsseits mit geringem Abstand nebeneinander angeordnet, wobei ihre Auslenkebenen 22, 23 parallel zueinander verlaufen. Die Elektrodenanordnungen 17a, 17b sind vorzugsweise derart miteinander verschaltet, dass die Biegewandler 12, 13 beim Anlegen einer Ansteuerspannung zu gegensinnigen Auslenkbewegungen angetrieben werden. Die Richtung dieser Auslenkbewegungen hängt dabei von der Polung der angelegten Ansteuerspannung ab. Die diese Funktionsweise gewährleistende Verschaltung kann in das Piezoventil 1 integriert sein, beispielsweise durch entsprechende Verschaltung der Kontaktmittel 18a, 18b und/oder der Elektrodenanordnungen 17a, 17b, kann aber auch extern vorgesehen sein.

Das Piezoventil des Ausführungsbeispiels ist als 3/3-Wegeventil konzipiert. Es verfügt über zwei steuerbare Ventilöffnungen 24, 25, von denen die erste (24) dem ersten Biegewandler 12 und die zweite (25) dem zweiten Biegewandler 13 zugeordnet ist. Entsprechend der Positionierung eines jeweiligen Biegewandlers 12, 13 kann die diesem zugeordnete Ventilöffnung 24, 25 verschlossen oder freigegeben werden.

Die beiden steuerbaren Ventilöffnungen 24, 25 befinden sich in der Ventilkammer 3 an der diese begrenzenden Innenfläche des Ventilgehäuses 2. Dort befindet sich außerdem eine nicht steuerbare dritte Ventilöffnung 26, die unabhängig vom Aktivierungszustand der Biegewandlereinheit 8 ständig mit der Ventilkammer 3 kommuniziert.

Jede Ventilöffnung 24, 25, 26 steht mit einem die Wandung des Ventilgehäuses 2 durchsetzenden Ventilkanal 27 in Verbindung, der nach außen geführt ist. Der der ersten Ventilöffnung 24 zugeordnete Ventilkanal 27 ist ein im Betrieb mit einer Druckquelle verbundener Speisekanal 27a, wobei als Druckmedium insbesondere ein gasförmiges Druckmedium und insbesondere Druckluft verwendet wird. Gleichwohl wäre auch ein hydraulisches Druckmedium geeignet.

Der mit der steuerbaren zweiten Ventilöffnung 25 kommunizierende Ventilkanal 27 ist ein Entlüftungskanal 27b und beispielsweise zur Atmosphäre geführt. Der noch verbleibende, mit der nicht steuerbaren dritten Ventilöffnung 26 verbundene Ventilkanal 27 repräsentiert einen Arbeitskanal 27c, an den ein zu betätigender Verbraucher, beispielsweise ein fluidisch betätigbarer Antrieb, anschließbar ist.

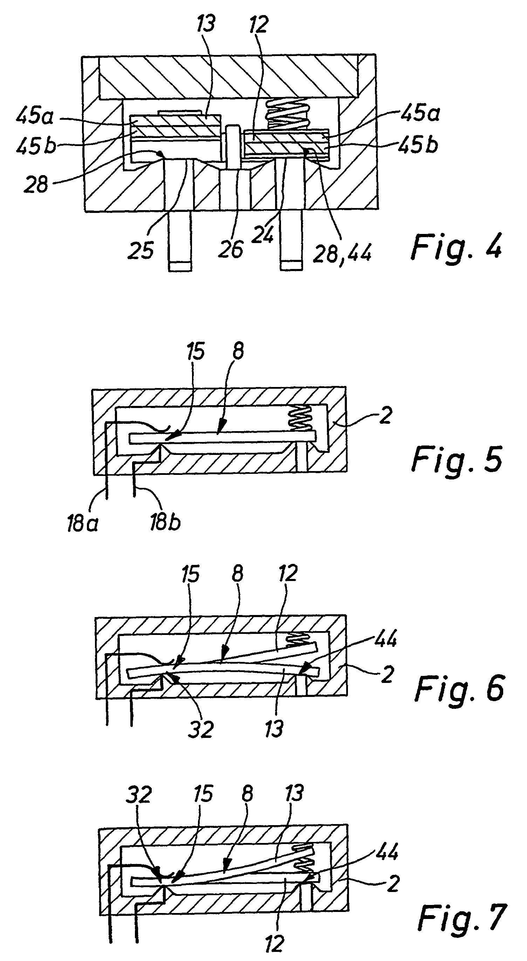

Durch entsprechende elektrische Ansteuerung und damit verbundene Auslenkung oder Nicht-Auslenkung können die beiden Biegewandler 12, 13 zur Einnahme bestimmter Stellungen veranlasst werden. Vorgesehen sind beim Ausführungsbeispiel die aus Fig. 2 und 5 hervorgehende Sperrstellung, die aus Fig. 3 und 6 hervorgehende Speisestellung und die aus Fig. 4 und 7 hervorgehende Entlüftungsstellung.

In der Sperrstellung sind beide steuerbaren Ventilöffnungen 24, 25 durch die zugeordneten Biegewandler 12, 13 dicht verschlossen, so dass das in der Ventilkammer 3 und in dem zum Verbraucher führenden Arbeitskanal 27c enthaltene Druckmedium eingesperrt ist.

In der Speisestellung ist die dem Speisekanal 27a zugeordnete erste Ventilöffnung 24 freigegeben, während gleichzeitig die mit dem Entlüftungskanal 27b verbundene steuerbare zweite Ventilöffnung 25 verschlossen ist. Auf diese Weise wird der Arbeitskanal 27c über die Ventilkammer 3 hinweg mit über den Speisekanal 27a zugeführtem Druckmedium gespeist.

In der Entlüftungsstellung ist, umgekehrt wie in der Speisestellung, der Speisekanal 27a abgesperrt und der Entlüftungskanal 27b freigegeben, so dass der an den Arbeitskanal 27c angeschlossene Verbraucher durch die Ventilkammer 3 hinweg zum Entlüftungskanal 27b entlüftet wird.

Die geschilderten Funktionen können als Schaltfunktionen bereitgestellt werden, möglich ist aber auch die Bereitstellung einer stetigen Steuerung mit variabel vorgegebenen Strömungsquerschnitten im Bereich der steuerbaren Ventilöffnungen 24, 25.

Das beispielsgemäße Piezoventil 1 könnte auch als 3/4-Wegeventil betrieben werden, wobei eine vierte Schaltstellung durch gleichzeitiges Freigeben beider steuerbarer Ventilöffnungen 24, 25 erhalten werden könnte.

Prinzipiell wäre es möglich, die zu steuernden Ventilöffnungen 24, 25 außerhalb des Auslenkweges und insbesondere längsseits oder stirnseitig neben dem zugeordneten Biegewandler 12, 13 zu plazieren, so dass die Steuerung des Öffnungsgrades durch die Randfläche des jeweiligen Biegewandlers 12, 13 erfolgt. In aller Regel wird jedoch die aus der Zeichnung ersichtliche Bauform bevorzugt, bei der die steuerbaren Ventilöffnungen 24, 25 unmittelbar im Auslenkweg des zugeordneten Biegewandlers 12, 13 plaziert sind und von einem vorzugsweise leicht erhaben ausgebildeten Ventilsitz 28 umgrenzt werden, auf dem der betreffende Biegewandler 12, 13 in der Schließstellung aufliegt und von dem er in der Offenstellung entsprechend dem freizugebenden Strömungsquerschnitt mehr oder weniger weit abgehoben ist. Es liegt also eine Art Sitzventil vor.

Indem die beiden Biegewandler 12, 13 durch Zusammenwirken mit den steuerbaren Ventilöffnungen 24, 25 zur Steuerung von Fluidströmen dienen, können sie als Steuer-Biegewandler bezeichnet werden.

Die steuerbaren Ventilöffnungen 24, 25 befinden sich auf der gleichen Seite der Biegewandlereinheit 8 und beim Ausführungsbeispiel unterhalb dessen Hauptausdehnungsebene. In Verbindung mit der mehrteiligen Gehäuseausführung hat dies den herstellungstechnischen Vorteil, dass die entsprechenden Maßnahmen in eine Formteilhälfte gelegt werden können.

Eine weitere wesentliche Besonderheit des Piezoventils 1 besteht darin, dass die Biegewandlereinheit 8 am Lagerungsabschnitt 14 nicht fest eingespannt ist, wie dies bei Piezoventilen üblicherweise der Fall ist. Statt dessen ist der Lagerungsabschnitt 14 an der Lagerstelle 15 um eine quer und insbesondere rechtwinkelig zu den Auslenkebenen 22, 23 verlaufende Drehachse 32 relativ zum Ventilgehäuse 2 verschwenkbar gelagert (Doppelpfeil 31). Da die Drehachse 32 bevorzugt mit axialem Abstand zur rückwärtigen Stirnfläche 33 der Biegewandlereinheit vorgesehen ist und sich insbesondere in unmittelbarer Nähe der den Biegewandlern 12, 13 zugewandten Vorderseite des Lagerungsabschnittes 14 befindet, ist die Biegewandlereinheit 8 insgesamt mit einem drehbar gelagerten zweiarmigen Hebel vergleichbar, der wippenartig verschwenkbar ist, wobei sich der Lagerungsabschnitt 14 in Fig. 1 nach unten bewegen würde, wenn man die beiden Biegewandler 12, 13 gleichzeitig nach oben verlagert, und umgekehrt.

Die Drehachse 32 könnte unmittelbar als materielle Achse realisiert sein, beispielsweise durch an den beiden längsseitigen Rändern der Biegewandlereinheit 8 vorstehende Achszapfen, die im Ventilgehäuse 2 unter Gewährleistung des Drehfreiheitsgrades gelagert sind.

Eine vor allem auch in fertigungstechnischer Hinsicht besonders vorteilhafte Definition der Drehachse 32 erfolgt beim Ausführungsbeispiel. Hier ist die Biegewandlereinheit 8 mit einer der beiden größerflächigen Seiten des vorzugsweise rechteckig oder quadratisch konturierten Lagerungsabschnittes 14 auf eine gehäuseseitige Auflagerpartie 35 aufgelegt und durch zwei von der entgegengesetzten Seite her auf den Lagerungsabschnitt 14 einwirkende Beaufschlagungselemente 36 gegen die Auflagerpartie 35 federelastisch vorgespannt. Die Auflagerpartie 35 ist beim Ausführungsbeispiel von einem in die Ventilkammer 3 hineinragenden Vorsprung der Wandung des Ventilgehäuses 2 gebildet und definiert eine rechtwinkelig zu den Auslenkebenen 22, 23 verlaufende Auflagerkante 37, auf der der Lagerungsabschnitt 14 aufliegt. Dabei verfügt der Lagerungsabschnitt 14 über eine nicht näher dargestellte Vertiefung, in die die Auflagerkante 37 geringfügig eintauchen kann, so dass die Biegewandlereinheit 8 durch formschlüssiges Zusammenwirken zwischen der Auflagerpartie 35 und dem Lagerungsabschnitt 14 an einer Axialbewegung relativ zum Ventilgehäuse 2 gehindert ist.

Es versteht sich, dass die axiale Fixierung auch auf andere Weise bewirkt werden könnte.

Beim Ausführungsbeispiel befindet sich die Drehachse 32 in einem Bereich des Lagerungsabschnittes 14, der bei elektrisch aktivierten Biegewandlern 12, 13 ebenfalls piezoelektrisch aktiv ist, weil sich die Elektrodenanordnungen 17a, 17b bis in den drehgelagerten Bereich erstrecken. Alternativ wäre es aber auch möglich, die Drehachse in einem unabhängig vom Betriebszustand der Biegewandler 12, 13 ständig piezoelektrisch inaktiven Bereich der Biegewandlereinheit 8 vorzusehen.

Damit die Biegewandlereinheit 8 in ihrer Längsausrichtung bezüglich des Ventilgehäuses 2 stabilisiert ist und sich nicht in ihrer Hauptausdehnungsebene verdrehen kann, ist noch ein gehäusefester Zentriervorsprung 38 vorgesehen, der schwertartig in den zwischen den beiden Biegewandlern 12, 13 vorhandenen schlitzartigen Zwischenraum 42 eingreift. Der Zentriervorsprung 38 ist zweckmäßigerweise der Vorderseite 34 des Lagerungsabschnittes 14 unmittelbar vorgeordnet und erstreckt sich entlang einer Teillänge der Biegewandler 12, 13.

Die Auflagerpartie 35 befindet sich zweckmäßigerweise am gleichen Gehäuseteil wie die steuerbaren Ventilöffnungen 24, 25, wobei zweckmäßigerweise auch der Zentriervorsprung 38 an diesem Gehäuseteil vorgesehen ist, bei dem es sich im Falle des Ausführungsbeispieles um das Unterteil 4 handelt.

Die Beaufschlagungselemente 36 sind zweckmäßigerweise als gehäuseseitig fixierte federnde Elemente ausgebildet, wobei vorliegend jedes Beaufschlagungselement 36 in Verlängerung eines der beiden Biegewandler 12, 13 plaziert ist und den Lagerungsabschnitt 14 beaufschlagt. Der Grund hierfür liegt darin, dass die Beaufschlagungselemente gleichzeitig als elektrische Kontaktmittel 18a verwendet werden, über die der Elektrodenanordnung 17a eines jeweiligen Biegewandlers 12, 13 die Ansteuerspannung eingespeist wird.

Zweckmäßigerweise übernimmt auch die Auflagerpartie 35 eine derartige Doppelfunktion, indem sie als Bestandteil der elektrischen Kontaktmittel 18b ausgeführt ist, über die die Stromeinleitung in die Elektrodenanordnung 17b des zweiten Piezokörpers 16b stattfindet. Es können hierzu jeweils die obersten und untersten Elektrodenschichten der Piezokörper 16a, 16b freigelegt sein, so dass eine unmittelbar Kontaktierung durch die dem Lagerungsabschnitt 14 zugeordneten elektrischen Kontaktmittel 18a, 18b erfolgen kann.

Anstelle zweier Beaufschlagungselemente 36 könnte prinzipiell auch ein einziges Beaufschlagungselement treten. Auch kann prinzipiell die Einspeisung der Ansteuerspannung getrennt von den zur Schwenklagerung vorgesehenen Mitteln erfolgen.

Bedingt durch die steife Verbindung der beiden Biegewandler 12, 13 im Bereich des Lagerungsabschnittes 14, können zwischen den beiden Biegewandlern 12, 13 in der Auslenkrichtung 21 Kräfte übertragen werden. Wird ein Biegewandler in einer Auslenkrichtung beaufschlagt, hat dies, sofern keine anderweitigen Vorkehrungen getroffen sind, eine Mitnahme des anderen Biegewandlers zur Folge.

Dieser Effekt wird beim Piezoventil des Ausführungsbeispiels unter anderem dazu verwendet, mit geringem Aufwand die Einnahme der Sperrstellung gemäß Fig. 2 bis 5 bei deaktivierten Biegewandlern 12, 13 zu gewährleisten. Es sind Federmittel 43 vorhanden, die zwischen dem Ventilgehäuse 2 und lediglich einem Biegewandler 12 wirksam sind, wobei sie diesen Biegewandler 12 in die Schließstellung vorspannen. Durch die relativ starre Verbindung im Bereich des Lagerungsabschnittes 14 hat dies zur Folge, dass auch der andere Biegewandler 13 in die Schließstellung vorgespannt wird, ohne dass es einer eigenen Beaufschlagung durch individuelle Federmittel bedürfte. Die von den Federmitteln 43 auf den unmittelbar zugeordneten Biegewandler 12 ausgeübte Schließkraft wirkt somit in vergleichbarer Weise auch auf den anderen Biegewandler 13 ein.

Als Federmittel 43 sind beim Ausführungsbeispiel eine Druckfedereinrichtung vorgesehen, die sich zwischen dem freien Endbereich des betreffenden Biegewandlers 12 und dem diesem gegenüberliegenden Abschnitt des Ventilgehäuses 2 abstützt. Allerdings wären prinzipiell auch andersartige Federmittel oder andere Angriffsstellen zum Einleiten der Federkraft möglich.

Zweckmäßigerweise wirken die Federmittel 43 mit dem den Speisekanal 27a steuernden ersten Biegewandler 12 zusammen, da hier durch den anstehenden Überdruck die größte Gegenkraft aufzubringen ist.

Der Vollständigkeit halber sei erwähnt, dass prinzipiell auch beide Biegewandler 12, 13 durch Federmittel in eine bestimmte Stellung vorgespannt sein könnten.

Ein besonders vorteilhafter Aspekt des Piezoventils 1 ergibt sich, wenn die Biegewandler 12, 13 im Betrieb gegensinnig ausgelenkt werden. Hier bewirkt die feste Verbindung zwischen den Biegewandlern 12, 13 in Verbindung mit der erläuterten Schwenklagerung eine Vergrößerung des vom betreffenden Steuer-Biegewandler realisierbaren Stellweges, also des realisierbaren Abstandes zwischen dem betreffenden Steuer-Biegewandler und der zugeordneten steuerbaren Ventilöffnung in der Offenstellung.

Zur Erläuterung seien hier zunächst die Sperrstellung gemäß Fig. 2 und 5 und die Speisestellung gemäß Fig. 3 und 6 betrachtet. Im deaktivierten Zustand liegt die Sperrstellung vor, in der die beiden Biegewandler 12, 13 durch die Federmittel 43 gegen den Ventilsitz 28 der zugeordneten Ventilöffnung 24, 25 angedrückt werden, so dass die Ventilöffnungen verschlossen sind und jeder Biegewandler eine Schließstellung einnimmt.

Zum Erhalt der Speisestellung wird der erste Biegewandler 12 im Sinne eines Abhebens vom zugeordneten Ventilsitz 28 angesteuert. Gleichzeitig erfolgt eine Beaufschlagung des zweiten Biegewandlers 13 derart, dass dieser die Tendenz hat, in entgegengesetzter Richtung ausgelenkt zu werden. Der zweite Biegewandler 13 wird somit zusätzlich gegen den ihm zugeordneten Ventilsitz 28 angedrückt, der hierbei als Abstützfläche 44 wirkt, die tatsächlich eine Auslenkung des zweiten Biegewandlers 13 im Bereich der zweiten Ventilöffnung 25 verhindert. Die aufgebrachte Auslenkkraft hat jedoch zur Folge, dass sich der zweite Biegewandler 13 etwa gemäß der schematischen Darstellung in Fig. 6 krümmt, so dass der Lagerungsabschnitt 14 um die Drehachse 32 verschwenkt wird, was auf Grund des oben erläuterten Mitnahmeeffektes zur Folge hat, dass der erste Biegewandler 12 um eine weitere Wegstrecke vom Ventilsitz 28 der zugeordneten Ventilöffnung 24 entfernt wird.

Der zweite Biegewandler 13 fungiert hier als Abstütz-Biegewandler, der zu einer Hubvergrößerung des als Steuer-Biegewandler arbeitenden ersten Biegewandlers 12 beiträgt.

Die entgegengesetzte Wirkungsweise ergibt sich bei einer Umpolung der Ansteuerspannung, so dass der erste Biegewandler 12 in die Schließstellung gedrückt wird und der zweite Biegewandler 13 von der zugeordneten zweiten Ventilöffnung 25 abhebt. In diesem Falle arbeitet der erste Biegewandler 12 als Abstütz-Biegewandler, der gegen den Ventilsitz 28 der zugeordneten ersten Ventilöffnung 24 vorgespannt wird, wobei dieser Ventilsitz 28 nun als Abstützfläche wirkt. Es ergibt sich dann die aus Fig. 4 und 7 ersichtliche Entlüftungsstellung, wobei der Stellweg des zweiten Biegewandlers 13 wiederum durch den geschilderten Effekt vergrößert wurde.

In Abhängigkeit von der gewählten Ansteuerung wirken somit die beiden Biegewandler 12, 13 wechselseitig als Abstütz-Biegewandler für den jeweils anderen Biegewandler und führen zu einer Erhöhung des realisierbaren Stellweges desselben.

Die Abstützung eines Biegewandlers kann bei Bedarf auch dazu verwendet werden, die Schließkraft zu verstärken, mit der der andere Biegewandler gegen eine zu steuernde Ventilöffnung gedrückt wird. In diesem Falle würden sich die zu steuernde Ventilöffnung und die dem Abstütz-Biegewandler zugeordnete Abstützfläche zweckmäßigerweise auf entgegengesetzten Seiten der Hauptausdehnungsebene der Biegewandlereinheit 8 befinden. Diese Bauform ist in der Zeichnung nicht abgebildet.

Beispielsweise in Verbindung mit einem Piezoventil, das lediglich für eine 2/2-Schaltfunktion ausgelegt ist, kann auf die wechselseitige Wirkung der beiden Biegewandler als Abstütz-Biegewandler verzichtet werden. Es kann dann vorgesehen sein, lediglich einen Biegewandler als zur Steuerung einer Ventilöffnung dienenden Steuer-Biegewandler einzusetzen und den anderen Biegewandler lediglich als Abstütz-Biegewandler einzusetzen, wobei die Abstützfläche eine beliebige gehäusefeste Fläche ist, die keiner Ventilöffnung zugeordnet ist. Der Abstütz-Biegewandler hätte dann keine eigenständige Fluidsteuerfunktion, sondern würde lediglich zur Wegund/oder Kraftvergrößerung des als Steuer-Biegewandler fungierenden anderen Biegewandlers eingesetzt werden.

Zweckmäßigerweise sind sämtliche Maßnahmen zur Schwenklagerung der Biegewandlereinheit 8 sowie die zu steuernden Ventilöffnungen 24, 25 und die Abstützflächen 44 an ein und demselben Gehäuseteil des Ventilgehäuses 2 vorgesehen, bei dem es sich vorliegend um das Unterteil 4 handelt.

Vorteilhaft bei dem Piezoventil 1 ist ferner, dass auf eine feste Einspannung der Biegewandlereinheit 8 verzichtet werden kann, die hinsichtlich einer Vorspannung besonders ausgelegt werden müsste. Die Montage gestaltet sich daher sehr einfach.

Bedingt durch die mechanische Bewegungskopplung der beiden Biegewandler 12, 13, können bei entsprechender Anpassung der Gehäusegeometrie und der Zuordnung der zu steuernden Ventilöffnungen sehr einfach Piezoventile mit unterschiedlichsten Betriebsverhalten verwirklicht werden. Beispielsweise bestünde die Möglichkeit, die beiden zu steuernden Ventilöffnungen 24, 25 abweichend vom Ausführungsbeispiel, bei dem sie mit gleichem Abstand zur Schwenkachse 32 plaziert sind, in unterschiedlichem Abstand zur Schwenkachse 32 anzuordnen. Auch könnten die Biegewandler 12, 13 anders als beim Ausführungsbeispiel, bei dem sie die gleiche Länge haben, mit unterschiedlicher Länge ausgestattet sein. Schließlich wäre es auch möglich, die den zu steuernden Ventilöffnungen 24, 25 zugeordneten Ventilsitze 28 nicht wie beim Ausführungsbeispiel in einer gemeinsamen Ebene liegend anzuordnen, sondern auf unterschiedlicher Höhe zu positionieren, so dass beispielsweise, anders als bei dem in Fig. 2 dargestellten Zustand, die Vorspannung des einen Biegewandlers gegen den zugeordneten Ventilsitz nicht gleichzeitig auch den anderen Biegewandler in einer Schließstellung hält, sondern die diesem zugeordnete Ventilöffnung offen bleibt.

Das Piezoventil kann auch derart ausgebildet werden, dass wenigstens einem Biegeelement zwei auf entgegengesetzten Längsseiten plazierte und zu steuernde Ventilöffnungen zugeordnet sind.

Die drehmomentsteife Verbindung der beiden Biegewandler 12, 13 im Bereich der Lagerstelle 15 kann durch beliebige geeignete Maßnahmen bewirkt werden, beispielsweise, indem man die beiden Biegewandler 12, 13 durch mechanische Verbindungsmittel relativ zueinander fixiert und/oder miteinander verspannt oder indem man die Biegewandler miteinander verklebt oder verschweißt. Besonders vorteilhaft ist jedoch die beim Ausführungsbeispiel realisierte Ausführungsform, bei der die in einer gemeinsamen Ebene liegenden Piezokörper der beiden Biegewandler 12, 13 mit ihren Piezomaterialschichten 45a, 45b einstückig fest miteinander verbunden sind. Die in der gleichen Schichtebene liegenden Piezomaterialschichten der Piezokörper der beiden Biegewandler 12, 13 sind auf diese Weise jeweils als ein Körper ausgeführt, der sich beispielsweise durch Einbringen eines den Zwischenraum 42 definierenden Längsschlitzes in eine Piezomaterialplatte erhalten lässt.

Durch die einstückige Bauweise lässt sich auch besonders einfach ein identischer struktureller Aufbau der beiden Biegewandler 12, 13 realisieren, was ein identisches Betriebsverhalten gewährleistet.

## Patentansprüche

1. Piezoventil, mit einer in einem Ventilgehäuse angeordneten Biegewandlereinheit (8), die mindestens zwei durch Anlegen einer Ansteuerspannung zu gegensinnigen Auslenkbewegungen antreibbare Biegewandler (12, 13) enthält, die mit zueinander parallelen Auslenkebenen (22, 23) längsseits nebeneinander angeordnet sind, wobei sie am einen Endbereich der Biegewandlereinheit (8) unter Bildung eines gemeinsamen Lagerungsabschnittes (14) fest miteinander verbunden sind, **dadurch gekennzeichnet, dass** die Biegewandlereinheit (8) an dem Lagerungsabschnitt (14) eine steife Verbindung zwischen den Biegewandlern (12, 13) aufweist, und daß die Biegewandlereinheit in ihrer Gesamtheit um eine quer zu den Auslenkebenen (22, 23) verlaufende Drehachse (32) gegenüber dem Ventilgehäuse (2) verschwenkbar gelagert ist, wobei mindestens ein Biegewandler (12, 13) als zur Steuerung mindestens einer ihm zugeordneten Ventilöffnung (24, 25) dienender Steuer-Biegewandler ausgeführt ist und der andere Biegewandler (13, 12) einen zur Stellweg- und/oder Kraftvergrößerung des Steuer-Biegewandlers geeigneten Abstütz-Biegewandler bildet, der durch Anlegen der Ansteuerspannung gegen eine in seinem Auslenkweg angeordnete Abstützfläche (44) vorspannbar ist.

2. Piezoventil nach Anspruch 1, **dadurch gekennzeichnet, dass** jeder Biegewandler (12, 13) als zur Steuerung mindestens einer Ventilöffnung (24, 25) dienender Steuer-Biegewandler ausgeführt ist, wobei im Auslenkweg jedes Biegewandlers (12, 13) eine Abstützfläche (44) vorgesehen ist, die es ermöglicht, den betreffenden Steuer-Biegewandler in bezug auf den anderen Steuer-Biegewandler als Abstütz-Biegewandler einzusetzen.

3. Piezoventil nach Anspruch 1 oder 2, **dadurch gekennzeichnet, dass** die zu steuernde Ventilöffnung (24, 25) im Auslenkweg des zugeordneten Biegewandlers (12, 13) plaziert ist.

4. Piezoventil nach Anspruch 3, **dadurch gekennzeichnet, dass** die Abstützfläche (44) von einem Ventilsitz (28) gebildet ist, der die vom zugeordneten Steuer-Biegewandler zu steuernde Ventilöffnung (24, 25) umgibt.

5. Piezoventil nach Anspruch 3 oder 4, **dadurch gekennzeichnet, dass** sich die von einem Steuer-Biegewandler zu steuernde Ventilöffnung (24, 25) auf der gleichen Längsseite der Biegewandlereinheit (8) befindet wie die dem benachbarten Abstütz-Biegewandler zugeordnete Abstützfläche (44).

6. Piezoventil nach Anspruch 5, **dadurch gekennzeichnet, dass** bei einer Biegewandlereinheit (8) mit zwei Steuer-Biegewandlern sämtliche zu steuernden Ventilöffnungen (24, 25) und Abstützflächen (44) auf der gleichen Längsseite der Biegewandlereinheit (8) angeordnet sind.

7. Piezoventil nach einem der Ansprüche 1 bis 6, **dadurch gekennzeichnet, dass** die Maßnahmen zur Schwenklagerung der Biegewandlereinheit (8) sowie die zu steuernden Ventilöffnungen (24, 25) und die Abstützflächen (44) an ein und demselben Gehäuseteil (4) des Ventilgehäuses (2) vorgesehen sind.

8. Piezoventil nach einem der Ansprüche 1 bis 7, **gekennzeichnet durch** Federmittel (43), die derart auf die Biegewandlereinheit (8) einwirken, dass mindestens ein Steuer-Biegewandler in Richtung der die zu steuernde Ventilöffnung (24, 25) verschließenden Schließstellung vorgespannt ist.

9. Piezoventil nach Anspruch 8, **dadurch gekennzeichnet, dass** die Federmittel (43) den zugeordneten Steuer-Biegewandler bei fehlender Ansteuerspannung in der Schließstellung halten.

10. Piezoventil nach einem der Ansprüche 1 bis 9, **dadurch gekennzeichnet, dass** die Biegeelemente (12, 13) derart elektrisch miteinander verknüpft sind, dass eine gemeinsame Ansteuerung möglich ist, die eine gleichzeitige gegensinnige Auslenkung hervorruft.

11. Piezoventil nach einem der Ansprüche 1 bis 10, **gekennzeichnet durch** mindestens eine ständig offene weitere Ventilöffnung (26), die je nach Schaltstellung der Biegewandler (12, 13) mit mindestens einer der steuerbaren Ventilöffnungen (24, 25) fluidisch verbindbar ist.

12. Piezoventil nach einem der Ansprüche 1 bis 11, **gekennzeichnet durch** eine Ausgestaltung mit einer 2/2-, 3/2-, 3/3- oder 3/4-Ventilfunktionalität.

13. Piezoventil nach einem der Ansprüche 1 bis 12, **dadurch gekennzeichnet, dass** die Biegewandlereinheit (8) zur Schwenklagerung mit einer Seite ihres Lagerabschnittes (14) auf einer gehäuseseitigen Auflagerpartie (35) aufliegt und durch mindestens ein von der entgegengesetzten Seite her einwirkendes Beaufschlagungselement (36) gegen die Auflagerpartie (35) vorgespannt ist.

14. Piezoventil nach Anspruch 13, **dadurch gekennzeichnet, dass** das mindestens eine Beaufschlagungselement (36) ein gehäuseseitig fixiertes federelastisches Element ist.

15. Piezoventil nach Anspruch 13 oder 14, **dadurch gekennzeichnet, dass** über mindestens ein Beaufschlagungselement (36) und/oder über die Auflagerpartie (35) eine zur Einspeisung der Ansteuerspannung geeignete elektrische Kontaktierung der Biegeelemente (12, 13) erfolgt.

16. Piezoventil nach einem der Ansprüche 1 bis 15, **dadurch gekennzeichnet, dass** die Biegewandlereinheit (8) im Bereich der Schwenklagerstelle in Längsrichtung der Biegewandlereinheit unbeweglich fixiert ist.

17. Piezoventil nach einem der Ansprüche 1 bis 16, **dadurch gekennzeichnet, dass** sich die Drehachse (32) in unmittelbarer Nähe der Vorderseite des Lagerungsabschnittes (14) befindet.

18. Piezoventil nach einem der Ansprüche 1 bis 17, **dadurch gekennzeichnet, dass** sich die Drehachse (32) in einem Bereich des Lagerungsabschnittes (14) befindet, der bei elektrisch aktivierten Biegewandlern (12, 13) piezoelektrisch aktiv oder inaktiv ist.

19. Piezoventil nach einem der Ansprüche 1 bis 18, **dadurch gekennzeichnet, dass** bei mehreren zu steuernden Ventilöffnungen (24, 25) die diesen zugeordneten Ventilsitze (28) einen unterschiedlichen Abstand von der Drehachse (32) besitzen.

20. Piezoventil nach einem der Ansprüche 1 bis 19, **dadurch gekennzeichnet, dass** bei mehreren zu steuernden Ventilöffnungen (24, 25) die diesen zugeordneten Ventilsitze (28) in einer gemeinsamen Ebene oder, mit Bezug auf die Auslenkrichtung (21), auf unterschiedlicher Höhe liegen.

21. Piezoventil nach einem der Ansprüche 1 bis 20, **gekennzeichnet durch** einen identischen strukturellen Aufbau der Biegewandler (12, 13).

22. Piezoventil nach einem der Ansprüche 1 bis 21, **dadurch gekennzeichnet, dass** die beiden Biegewandler (12, 13) jeweils mindestens einen, eine oder mehrere Piezomaterialschichten (45a, 45b) enthaltenden Piezokörper (16a, 16b) mit zugehöriger Elektrodenanordnung (17a, 17b) aufweisen, wobei sie am Lagerungsabschnitt (14) mit den Piezomaterialschichten (45a, 45b) ihrer Piezokörper (16a, 16b) einstückig fest miteinander verbunden sind.

## Claims

1. Piezoelectric valve with a bending transducer unit (8) mounted in a valve casing, containing at least two bending transducers (12, 13) which may be driven to make opposing deflection movements by application of a drive voltage and which are mounted alongside one another with parallel deflection planes (22, 23), wherein at one end section of the bending transducer unit (8) they are joined together to form a common bearing section (14), **characterised in that** at the bearing section (14) the bending transducer unit (8) has a rigid connection between the bending transducers (12, 13), and that the bending transducer unit in its totality is pivotably mounted relative to the valve casing (2) around an axis of rotation (32) running at right-angles to the deflection planes (22, 23), wherein at least one bending transducer (12, 13) is designed as a control bending transducer for the control of one or more valve ports (24, 25) assigned to it, and the other bending transducer (13, 12) forms a support bending transducer suitable for increasing the control distance and or force of the control bending transducer, and which may be biased against a support surface (44) located in its deflection path by application of the drive voltage.

2. Piezoelectric valve according to claim 1, **characterised in that** each bending transducer (12, 13) is designed as a control bending transducer for the control of one or more valve ports (24, 25), with a support surface (44) provided in the deflection path of each bending transducer (12, 13) and making it possible for the control bending transducer concerned to be used as support bending transducer for the other control bending transducer.

3. Piezoelectric valve according to claim 1 or 2, **characterised in that** the valve port (24, 25) to be controlled is placed in the deflection path of the assigned bending transducer (12, 13).

4. Piezoelectric valve according to claim 3, **characterised in that** the support surface (44) is formed by a valve seat (28) which surrounds the valve port (24, 25) to be controlled by the assigned control bending transducer.

5. Piezoelectric valve according to claim 3 or 4, **characterised in that** the valve port (24, 25) to be controlled by a control bending transducer is located on the same long side of the bending transducer unit (8) as the support surface (44) assigned to the adjacent support bending transducer.

6. Piezoelectric valve according to claim 5, **characterised in that**, in the case of a bending transducer unit (8) with two control bending transducers, all valve ports (24, 25) to be controlled and all support surfaces (44) are located on the same long side of the bending transducer unit (8).

7. Piezoelectric valve according to any of claims 1 to 6, **characterised in that** the measures for swivel mounting of the bending transducer unit (8), together with the valve ports (24, 25) to be controlled and the support surfaces (44), are provided on one and the same casing section (4) of the valve casing (2).

8. Piezoelectric valve according to any of claims 1 to 7, **characterised by** spring means (43) which act on the bending transducer unit (8) in such a way that at least one control bending transducer is biased in the direction of the closing position which closes the valve port (24, 25) to be controlled.

9. Piezoelectric valve according to claim 8, **characterised in that** the spring means (43) hold the assigned control bending transducer in the closing position in the absence of a drive voltage.

10. Piezoelectric valve according to any of claims 1 to 9, **characterised in that** the bending transducers (12, 13) are electrically linked to one another in such a way that joint activation, generating a simultaneously opposing deflection, is possible.

11. Piezoelectric valve according to any of claims 1 to 10, **characterised by** at least one constantly open valve port (26), which may be fluidically connected to one or more of the controllable valve ports (24, 25), depending on the switching position of the bending transducer (12, 13).

12. Piezoelectric valve according to any of claims 1 to 11, **characterised by** a design with 2/2, 3/2, 3/3 or 3/4 way valve functions.

13. Piezoelectric valve according to any of claims 1 to 12, **characterised in that** for swivel mounting the bending transducer unit (8) rests with one side of its bearing section (14) on a casing-side support section (35), and is biased against the support section (35) by one or more pressure-loading elements (36) acting from the opposite side.

14. Piezoelectric valve according to claim 13, **characterised in that** the pressure-loading element or elements (36) is or are spring-elastic elements fixed to the casing side.

15. Piezoelectric valve according to claim 13 or 14, **characterised in that** electrical contacting of the bending transducers (12, 13) suitable for feeding the drive voltage is effected via one or more pressure-loading elements (36) and/or via the support section (35).

16. Piezoelectric valve according to any of claims 1 to 15, **characterised in that**, in the area of the swivel mounting point, the bending transducer unit (8) is fixed immovably in the axial direction of the bending transducer unit .

17. Piezoelectric valve according to any of claims 1 to 16, **characterised in that** the axis of rotation (32) is located in the immediate vicinity of the front side of the bearing section (14).

18. Piezoelectric valve according to any of claims 1 to 17, **characterised in that** the axis of rotation (32) is located in an area of the bearing section (14) which is piezoelectrically active or inactive when the bending transducers (12, 13) are electrically activated.

19. Piezoelectric valve according to any of claims 1 to 18, **characterised in that**, with several valve ports (24, 25) to be controlled, the valve seats (28) assigned to them are at varying distances from the axis of rotation (32).

20. Piezoelectric valve according to any of claims 1 to 19, **characterised in that**, with several valve ports (24, 25) to be controlled, the valve seats (28) assigned to them lie in a common plane or, with reference to the deflection direction (21), at different heights.

21. Piezoelectric valve according to any of claims 1 to 20, **characterised by** an identical structural design of the bending transducers (12, 13).

22. Piezoelectric valve according to any of claims 1 to 21, **characterised in that** each of the two bending transducers (12, 13) has at least one piezoelectric body (16a, 16b) containing several piezoelectric material layers (45a, 45b) and with associated electrode arrangement (17a, 17b), wherein at the bearing section (14) they are connected securely in one piece to the piezoelectric material layers (45a, 45b) of their piezoelectric bodies (16a, 16b).

## Revendications

1. Soupape piézoélectrique, avec une unité convertisseur de flexion (8) disposée dans un boîtier de soupape (8), qui contient au moins deux convertisseurs de flexion (12, 13) pouvant être entraînés par l'application d'une tension d'amorçage pour des mouvements de déviation opposés, lesquels convertisseurs sont disposés avec des plans de déviation (22, 23) parallèles entre eux dans le sens longitudinal et les uns à côté des autres, moyennant quoi ils sont reliés de façon fixe entre eux sur une zone d'extrémité de l'unité convertisseur de flexion (8) en formant une partie de fixation (14) commune, **caractérisée en ce que** l'unité convertisseur (8) présente sur la partie de fixation (14) une liaison rigide entre les convertisseurs de flexion (12, 13), et **en ce que** l'unité convertisseur de flexion est montée de façon à pouvoir basculer dans sa globalité, autour d'un axe de rotation (32) agencé transversalement aux plans de déviation (22, 33), par rapport au boîtier de soupape (2), moyennant quoi au moins un convertisseur de flexion (12, 13) est réalisé comme un convertisseur de flexion de commande servant à la commande d'au moins une ouverture de soupape (24, 25) associée au convertisseur et l'autre convertisseur de flexion (13, 12) forme un convertisseur de flexion de soutien approprié pour l'agrandissement de la course de réglage et/ou de la force du convertisseur de flexion de commande, lequel convertisseur est pré-tendu par l'application de la tension d'amorçage contre une surface de soutien (44) disposée dans sa course de déviation.

2. Soupape piézoélectrique selon la revendication 1, **caractérisée en ce que** chaque convertisseur de flexion (12, 13) est réalisé comme un convertisseur de flexion de commande servant à la commande d'au moins une ouverture de soupape (24, 25), moyennant quoi il est prévu dans la course de déviation de chaque convertisseur de flexion (12, 13) une surface d'appui (44) qui permet d'utiliser le convertisseur de flexion de commande concerné par rapport à l'autre convertisseur de flexion de commande comme convertisseur de flexion de soutien.

3. Soupape piézoélectrique selon la revendication 1 ou 2, **caractérisée en ce que** l'ouverture de soupape (24, 25) à commander est placée dans le trajet de déviation du convertisseur de flexion (12, 13) associé.

4. Soupape piézoélectrique selon la revendication 3, **caractérisée en ce que** la surface d'appui (44) est formée par un siège de soupape (28), qui entoure l'ouverture de soupape (24, 25) à commander par le convertisseur de flexion de commande associé.

5. Soupape piézoélectrique selon la revendication 3 ou 4, **caractérisée en ce que** l'ouverture de soupape (24, 25) à commander par un convertisseur de flexion de commande se trouve sur le même côté longitudinal de l'unité convertisseur de flexion (8) que la surface d'appui (44) associée au convertisseur de flexion de soutien voisin.

6. Soupape piézoélectrique selon la revendication 5, **caractérisée en ce que**, sur une unité convertisseur de flexion (8) équipée de deux convertisseurs de flexion de commande, toutes les ouvertures de soupape (24, 25) à commander et surfaces de support (44) sont disposées sur le même côté longitudinal de l'unité convertisseur de flexion (8).

7. Soupape piézoélectrique selon l'une des revendications 1 à 6, **caractérisée en ce que** les dispositions pour le montage basculant de l'unité convertisseur de flexion (8) ainsi que les ouvertures de soupape (24, 25) à commander et les surfaces d'appui (44) sont prévues sur une seule et même partie de boîtier (4) du boîtier de soupape (2).

8. Soupape piézoélectrique selon l'une des revendications 1 à 7, **caractérisée par** des moyens à ressort (43), qui agissent sur l'unité convertisseur de flexion (8) de telle sorte qu'au moins un convertisseur de flexion de commande est pré-tendu en direction de la position de fermeture fermant l'ouverture de soupape (24, 25) à commander.

9. Soupape piézoélectrique selon la revendication 8, **caractérisée en ce que** les moyens à ressort (43) maintiennent le convertisseur de flexion de commande associé dans la position de fermeture, en l'absence de tension d'amorçage.

10. Soupape piézoélectrique selon l'une des revendications 1 à 9, **caractérisée en ce que** les éléments de flexion (12, 13) sont reliés entre eux au plan électrique de telle sorte qu'on peut avoir un amorçage commun qui provoque une déviation simultanée dans le sens opposé.

11. Soupape piézoélectrique selon l'une quelconque des revendications 1 à 10, **caractérisée par** au moins une autre ouverture de soupape (26) constamment ouverte qui, selon la position de commutation du convertisseur de flexion (12, 13), peut être reliée par fluide avec au moins l'une des ouvertures de soupape (24, 25) contrôlables.

12. Soupape piézoélectrique selon l'une quelconque des revendications 1 à 11, **caractérisée par** une conception avec une fonctionnalité de soupape 2/2, 3/2, 3/3 ou 3/4.

13. Soupape piézoélectrique selon l'une des revendications 1 à 12, **caractérisée en ce que** l'unité convertisseur de flexion (8), pour le montage basculant, repose avec un côté de sa partie support (14) sur une partie d'appui (35) côté boîtier et est pré-tendue contre la partie d'appui (35) par au moins un élément de sollicitation (36) agissant par le côté opposé.

14. Soupape piézoélectrique selon la revendication 13, **caractérisée en ce que** le au moins un élément de sollicitation (36) est un élément élastique fixé côté boîtier.

15. Soupape piézoélectrique selon la revendication 13 ou 14, **caractérisée en ce qu'**un contact électrique des éléments de flexion (12, 13) approprié pour l'alimentation de la tension d'amorçage, s'effectue par au moins un élément de sollicitation (36) et/ou par la partie d'appui (35).

16. Soupape piézoélectrique selon l'une des revendications 1 à 15, **caractérisée en ce que** l'unité convertisseur de flexion (8) est fixée de façon immobile dans la zone du point support de basculement dans le sens longitudinal de l'unité convertisseur de flexion.

17. Soupape piézoélectrique selon l'une des revendications 1 à 16, **caractérisée en ce que** l'axe de rotation (32) se trouve à proximité immédiate de la face avant de la partie de fixation (14).

18. Soupape piézoélectrique selon l'une des revendications 1 à 17, **caractérisée en ce que** l'axe de rotation (32) se trouve dans une zone de la partie de fixation (14), qui est active ou inactive au plan piézoélectrique pour des convertisseurs de flexion (12, 13) activés électriquement.

19. Soupape piézoélectrique selon l'une des revendications 1 à 18, **caractérisée en ce que**, avec plusieurs ouvertures de soupape (24, 25) à commander, les sièges de soupape (28) associés à ces ouvertures présentent un espacement différent par rapport à l'axe de rotation (32).

20. Soupape piézoélectrique selon l'une des revendications 1 à 19, **caractérisée en ce que**, avec plusieurs ouvertures de soupape (24, 25) à commander, les sièges de soupape (28) associés à ces ouvertures sont disposés dans un plan commun ou, par rapport au sens de déviation (21), à une hauteur différente.

21. Soupape piézoélectrique selon l'une quelconque des revendications 1 à 20, **caractérisée par** une constitution de structure identique des convertisseurs de flexion (12, 13).

22. Soupape piézoélectrique selon l'une des revendications 1 à 21, **caractérisée en ce que** les deux convertisseurs de flexion (12, 13) présentent respectivement au moins un corps piézoélectrique (16a, 16b) contenant une ou plusieurs couches de matériau piézoélectrique (45a, 45b) avec un agencement d'électrodes (17a, 17b) spécifique, moyennant quoi ils sont reliés d'un seul tenant et de façon fixe entre eux sur la partie de fixation (14) avec les couches de matériau piézoélectrique (45a, 45b) de leurs corps piézoélectriques (16a, 16b).
